# EUROPEAN PATENT APPLICATION

(11) **EP 4 672 353 A1**
(43) Date of publication of application: **31.12.2025**
(21) Application number: 24866916.0
(22) Date of filing: 04.06.2024
(51) Int. Cl.: H01M 4/13, H01M 4/139, H01M 4/04, H01M 10/052, H01M 10/054, H01M 10/42

(54) **MODIFIED ELECTRODE SHEET, MANUFACTURING METHOD THEREFOR, SECONDARY BATTERY, AND ELECTRICAL APPARATUS**

(30) Priority: 22.09.2023 CN 202311229296
(71) Applicant: Contemporary Amperex Technology Co., Limited, Jiaocheng District Ningde Fujian 352100 (CN)
(72) Inventor: WU, Kai, Ningde, Fujian 352100 (CN); WAN, Yuejuan, Ningde, Fujian 352100 (CN); GUO, Bingkun, Ningde, Fujian 352100 (CN); ZHANG, Xinxin, Ningde, Fujian 352100 (CN); XU, Longchao, Ningde, Fujian 352100 (CN)
(74) Representative: Lorenz Seidler Gossel Part. mbB
(86) International application number: PCT/CN2024/097203
(87) International publication number: WO 2025/060495

(57) **Abstract**

A modified electrode plate, a preparation method thereof, a secondary battery, and an electric apparatus are provided. The modified electrode plate includes an electrode plate, the electrode plate having element sodium or element lithium on its surface, and the electrode plate including a pre-lithiated negative electrode plate or a pre-sodiated negative electrode plate; a protective film, the protective film including a first group and a second hydrophobic group, the first group being attached to the surface of the electrode plate, and the second hydrophobic group being distal from the electrode plate and the second hydrophobic group including a hydrophobic group and being exposed on a surface of the protective film. Disposing the protective film having the hydrophobic group on the surface of the electrode plate can effectively block water, oxygen, or carbon dioxide in the air so as to effectively prevent water, oxygen, or carbon dioxide from passing through the protective layer to react with active components in the electrode plate, thereby improving the first-cycle gram capacity of the electrode plate.

## Description

### CROSS-REFERENCE TO RELATED APPLICATIONS

This application claims priority to Chinese Patent Application No. 202311229296.X, filed on September 22, 2023 and entitled "MODIFIED ELECTRODE PLATE, PREPARATION METHOD THEREOF, SECONDARY BATTERY, AND ELECTRIC APPARATUS," the entire contents of which are incorporated herein by reference.

### TECHNICAL FIELD

This application relates to the field of battery technologies, and in particular, to a modified electrode plate, a preparation method thereof, a secondary battery, and an electric apparatus.

### BACKGROUND

During initial charge-discharge of a secondary battery, a solid electrolyte interphase (SEI) film is formed on a surface of a negative electrode active material, permanently consuming active ions (lithium or sodium) from a positive electrode, resulting in low initial coulombic efficiency (ICE) and energy density. In particular, during repeated charging, the negative electrode active material undergoes continuous swelling and contraction during the intercalation/deintercalation of active ions, which easily leads to structural collapse and capacity decay, causing instability in the solid electrolyte interphase film. The continuous formation and destruction of the SEI film continuously consume active ions, while a stable SEI film is a key factor in extending battery cycle life. Therefore, forming a robust and durable SEI film at a negative electrode without sacrificing active ions is critical to improving its performance.

Currently, pre-lithiation or pre-sodiation of negative electrodes is a relatively effective solution. Pre-lithiation or pre-sodiation compensates for active ions consumed during reaction and, to some extent, mitigates volume swelling of negative electrode active materials, thereby enhancing the stability of SEI films and improving the performance of secondary batteries.

However, after pre-lithiation or pre-sodiation treatment, the negative electrodes have deteriorated water and oxygen stability, and therefore are prone to oxidation when exposed to air. This limits the first-cycle gram capacity of negative electrodes.

### SUMMARY

This application provides a modified electrode plate, a preparation method thereof, a secondary battery, and an electric apparatus to improve the stability of the electrode plate in air.

According to a first aspect of this application, a modified electrode plate is provided, including an electrode plate, the electrode plate having element sodium or element lithium on its surface, and the electrode plate including a pre-lithiated negative electrode plate or a pre-sodiated negative electrode plate; and a protective film, the protective film including a first group and a hydrophobic group, the first group being attached to the surface of the electrode plate, the hydrophobic group being distal from the electrode plate, and the hydrophobic group being exposed on a surface of the protective film.

The pre-lithiated negative electrode plate or pre-sodiated negative electrode plate has an SEI film on its surface. The protective film provided on the electrode plate does not adversely affect the SEI film, ensuring the normal function of the SEI film. Additionally, the protective film has the hydrophobic group on its surface and therefore can effectively block water, oxygen, or carbon dioxide in the air, effectively mitigating reactions between water, oxygen, or carbon dioxide passing through the protective layer and active components in the electrode plate, thereby improving the first-cycle gram capacity of the electrode plate.

In any embodiment of the first aspect, the first group includes any one or more of a phosphate group, a halogenated silyl group, a siloxane group, a thiol group, a carboxylic acid group, or -N=N-. Each of the aforementioned first groups is adsorbed onto the element sodium or element lithium on the surface of the electrode plate through chemisorption or electrostatic adsorption, providing stable adsorption. The formed protective film can provide long-term protection to the electrode plate.

In any embodiment of the first aspect, the hydrophobic group includes any one or more of a C6-C20 aryl group, a C1-C50 alkyl group, or a C1-C50 halogenated alkyl group; and optionally, the hydrophobic group includes any one or more of a C6-C10 aryl group, a C1-C40 alkyl group, or a C1-C40 halogenated alkyl group. In the aforementioned hydrophobic groups, the aryl, alkyl, or halogenated alkyl group serves as the hydrophobic group, with the alkyl or halogenated alkyl group acting as the outermost group of the hydrophobic group to achieve the hydrophobic effect of the protective film during application.

In any embodiment of the first aspect, the protective film includes any one or more of a C1-C50 alkyl phosphonate film, a C1-C50 alkyl chlorosilane film, a C1-C50 fluorinated alkyl siloxane film, a C1-C50 thiol film, or benzotriazole; and optionally, the protective film includes any one or more of a C1-C40 alkyl phosphonate film, a C1-C30 alkyl chlorosilane film, a C1-C40 fluorinated alkyl siloxane film, or a C1-C10 thiol film. The materials forming the aforementioned protective films have self-assembly properties, allowing them to self-assemble on the surface of the electrode plate to form a protective film with an alkyl or halogenated alkyl group as the hydrophobic group and phosphonate, chlorosilane, siloxane, thiol, or -N=N- as the first group. The exposed hydrophobic group of the protective film provides the protective film with hydrophobic properties, preventing water and oxygen in the air.

In any embodiment of the first aspect, the C1-C40 alkyl phosphonate film includes any one or more of a propyl phosphonate film, an octadecyl phosphonate film, or a dihexadecyl phosphonate film; optionally, the C1-C30 alkyl chlorosilane film includes any one or more of an n-propyltrichlorosilane film, an isopropyltrichlorosilane film, an n-butyltrichlorosilane film, a tert-butyltrichlorosilane film, an n-hexyltrichlorosilane film, an n-heptyltrichlorosilane film, a tridecyltrichlorosilane film, a tetradecyltrichlorosilane film, an octadecyltrichlorosilane film, or tricosyltrichlorosilane; optionally, the C1-C30 fluorinated alkyl siloxane film includes any one or more of a heptadecafluorodecyl-trimethoxysilane (FAS-17) film or a trifluoropropyl-trimethoxysilane (FAS-3) film; or optionally, the C1-C10 thiol film includes any one or more of an n-propylthiol film, an ethylthiol film, an isopropylthiol film, an n-butylthiol film, a tert-butylthiol film, an n-pentylthiol film, an n-hexylthiol film, or an n-decylthiol film.

In any embodiment of the first aspect, the modified electrode plate includes a current collector and an active layer disposed on at least one surface of the current collector, the protective film being attached to the active layer; the protective film includes a C1-C50 alkyl phosphonate film, where a mass content of element P in the total elements of the active layer and the protective film of the modified electrode plate is 300 ppm to 500 ppm; the protective film includes a C1-C50 alkyl chlorosilane film, where a mass content of element Si in the total elements of the active layer and the protective film of the modified electrode plate is 250 ppm to 400 ppm, and a mass content of element Cl in the total elements of the active layer and the protective film of the modified electrode plate is 300 ppm to 500 ppm; the protective film includes a C1-C50 fluorinated alkyl siloxane film, where a mass content of element Si in the total elements of the active layer and the protective film of the modified electrode plate is 250 ppm to 400 ppm, and a mass content of element F in the total elements of the active layer and the protective film of the modified electrode plate is 500 ppm to 750 ppm; or the protective film includes a C1-C50 thiol film, where a mass content of element S in the total elements of the active layer and the protective film of the modified electrode plate is 100 ppm to 300 ppm.

In any embodiment of the first aspect, a water contact angle of the modified electrode plate is 65° to 85°. A larger contact angle indicates better compactness of the protective film and better protection for the electrode plate.

In any embodiment of the first aspect, the protective film is a self-assembled monolayer film. The self-assembled monolayer formed on the surface of the electrode plate has better compactness and uniformity, more effectively blocking water and oxygen in the air from entering the electrode plate. Additionally, the self-assembled monolayer film is a single molecular layer and can have a nanoscale thickness, and such thickness typically does not hinder the transmission of lithium/sodium ions at the interface or degrade the kinetic performance of the material, thus having no impact on the electrical performance of the electrode assembly.

In any embodiment of the first aspect, optionally, the pre-lithiated negative electrode plate includes any one or more of a metallic lithium pre-lithiated negative electrode plate, a lithium alloy pre-lithiated negative electrode plate, or an organic lithium pre-lithiated negative electrode plate.

In any embodiment of the first aspect, the pre-sodiated negative electrode plate includes any one or more of a metallic sodium pre-sodiated negative electrode plate, an electrochemical pre-sodiated negative electrode plate, or an organic sodium pre-sodiated negative electrode plate.

According to a second aspect of this application, a preparation method of any one of the modified electrode plates of the first aspect is provided. The preparation method includes: preparing a protective agent solution, the protective agent including a first group and a hydrophobic group; and immersing the electrode plate in the protective agent solution for a predetermined time, the electrode plate having element sodium or element lithium on its surface, such that the first group is attached to the surface of the electrode plate, and the hydrophobic group is distal from the electrode plate to form a protective film, thereby obtaining the modified electrode plate.

The above preparation method is simple to operate and widely adaptable, applicable to the modification of various electrode plates. The protective film formed using the protective agent effectively isolates the electrode plate from water and oxygen.

In any embodiment of the second aspect, a solvent of the protective agent solution includes an ether solvent; and optionally, the ether solvent includes ethylene glycol dimethyl ether, diethylene glycol dimethyl ether, triethylene glycol dimethyl ether, tetraethylene glycol dimethyl ether, tetrahydrofuran (THF), methyl tetrahydrofuran, or 1,3-dioxolane.

In any embodiment of the second aspect, a concentration of the protective agent solution is 0.01 wt% to 5 wt%, optionally 0.5 wt% to 3 wt%. By adjusting the concentration of the protective agent solution, the compactness and mass of the formed protective film are adjusted.

In any embodiment of the second aspect, the predetermined time is 2 min to 30 min, optionally 10 min to 20 min. Within the predetermined time, the protective agent molecules undergo continuous adsorptiondesorption on the surface of the electrode plate to perform gradual self-repairing to reach a dynamic equilibrium, so as to form the protective film.

According to a third aspect of this application, a secondary battery is provided, including a positive electrode plate, a negative electrode plate, and an electrolyte, where the positive electrode plate or the negative electrode plate includes any one of the modified electrode plates provided in the first aspect.

According to a fourth aspect of this application, an electric apparatus is provided, including a secondary battery, where the secondary battery includes any one of the secondary batteries provided in the third aspect.

### BRIEF DESCRIPTION OF DRAWINGS

To more clearly illustrate the technical solutions of the embodiments of this application, the drawings required for use in the embodiments of this application are briefly introduced below. It is apparent that the drawings described below are only some embodiments of this application, and those skilled in the art can obtain other drawings based on these drawings without creative effort.
FIG. 1 is a schematic diagram of a secondary battery according to an embodiment of this application.
FIG. 2 is an exploded view of the secondary battery according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a secondary battery as a power source according to an embodiment of this application.

In the drawings, the drawings are not drawn to actual scale.

Description of reference signs: 1. battery pack; 2. upper box body; 3. lower box body; 4. battery module; 5. secondary battery cell; 51. housing; 52. electrode assembly; and 53. top cover assembly.

### DESCRIPTION OF EMBODIMENTS

The embodiments of this application are described in further detail below with reference to the drawings and examples. The detailed descriptions and drawings of the following embodiments are provided to illustrate the principles of this application by way of example but should not be used to limit the scope of this application, that is, this application is not limited to the described embodiments.

Hereinafter, embodiments specifically disclosing the modified electrode plate, the preparation method thereof, the secondary battery, and the electric apparatus of this application are described in detail with appropriate reference to the drawings. However, unnecessary detailed descriptions may be omitted. For example, detailed descriptions of well-known matters or repetitive descriptions of substantially identical structures may be omitted. This is to avoid unnecessarily lengthy descriptions and facilitate understanding by those skilled in the art. Additionally, the drawings and the following descriptions are provided to enable those skilled in the art to fully understand this application and are not intended to limit the subject matter recited in the claims.

The "ranges" disclosed in this application are defined in the form of lower and upper limits, and a given range is defined by selecting a lower limit and an upper limit, which define the boundaries of a particular range. Ranges defined in this manner may be inclusive or exclusive of the endpoints and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents an abbreviated representation of any combination of real numbers between a and b, where both a and b are real numbers. For example, the numerical range "0-5" indicates that all real numbers between "0-5" have been listed herein, and "0-5" is merely an abbreviated representation of these numerical combinations. Furthermore, when a parameter is expressed as an integer ≥ 2, it is equivalent to disclosing that the parameter is, for example, an integer of 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably sequentially. For example, the method including steps (a) and (b) indicates that the method may include steps (a) and (b) performed sequentially, or steps (b) and (a) performed sequentially. For example, mentioning that the method may further include step (c) indicates that step (c) may be added to the method in any order, for example, the method may include steps (a), (b), and (c), or steps (a), (c), and (b), or steps (c), (a), and (b).

### [Secondary battery]

A secondary battery, also known as a rechargeable battery or storage battery, refers to a battery that can be recharged to reactivate the active material for continued use after discharge.

Typically, a secondary battery includes a positive electrode plate, a negative electrode plate, and an electrolyte. During the charge-discharge process of the battery, active ions (for example, lithium ions or sodium ions) intercalate and deintercalate back and forth between the positive electrode plate and the negative electrode plate. The electrolyte, positioned between the positive electrode plate and the negative electrode plate, primarily serves to conduct active ions.

### [Modified electrode plate]

As described in the background, after pre-lithiation or pre-sodiation treatment, the negative electrode plate exhibits poor water and oxygen stability and is prone to oxidation when placed in air, resulting in reduced first-cycle coulombic efficiency of the negative electrode, which in turn affects the capacity utilization of the positive electrode and leads to degraded battery cycling performance. Similarly, the surface of the positive electrode plate may also contain sodium or lithium ions, leading to poor water and oxygen stability, which also results in reduced first-cycle coulombic efficiency of the positive electrode and degraded battery cycling performance. To improve the first-cycle coulombic efficiency of the electrode plate, a first embodiment of this application provides a modified electrode plate. The modified electrode plate includes an electrode plate and a protective film, the electrode plate having element sodium or element lithium on its surface, and the electrode plate including a pre-lithiated negative electrode plate or a pre-sodiated negative electrode plate. The protective film includes a first group and a hydrophobic group, the first group being attached to the surface of the electrode plate, the hydrophobic group being distal from the electrode plate, and the hydrophobic group being exposed on a surface of the protective film.

The pre-lithiated negative electrode plate or pre-sodiated negative electrode plate has an SEI film on its surface. The protective film provided on the electrode plate does not adversely affect the SEI film, ensuring the normal function of the SEI film. Additionally, the protective film has the hydrophobic group on its surface and therefore can effectively block water, oxygen, or carbon dioxide in the air, effectively mitigating reactions between water, oxygen, or carbon dioxide passing through the protective layer and active components in the electrode plate, thereby improving the first-cycle gram capacity of the electrode plate.

In some embodiments of this application, the first group includes any one or more of a phosphate group, a halogenated silyl group, a siloxane group, a thiol group, a carboxylic acid group, or -N=N-. Each of the aforementioned first groups is adsorbed onto the element sodium or element lithium on the surface of the electrode plate through chemisorption or electrostatic adsorption, providing stable adsorption. The formed protective film can provide long-term protection to the electrode plate.

In some embodiments of this application, the hydrophobic group includes any one or more of a C6-C20 aryl group, a C1-C50 alkyl group, or a C1-C50 halogenated alkyl group; and optionally, the hydrophobic group includes any one or more of a C6-C10 aryl group, a C1-C40 alkyl group, or a C1-C30 halogenated alkyl group. The aforementioned hydrophobic groups are structurally stable and thus do not adversely affect the battery performance. In the aforementioned hydrophobic groups, the aryl, alkyl, or halogenated alkyl group serves as the hydrophobic group, with the alkyl or halogenated alkyl group acting as the outermost group of the hydrophobic group to achieve the hydrophobic effect of the protective film during application.

Compounds having the aforementioned first group and hydrophobic group exhibit good solubility in the electrolyte of a secondary battery. Therefore, when the modified electrode plate of this application is used in a secondary battery, the protective film gradually dissolves in the electrolyte, without affecting the function of the active components of the electrode plate.

The materials used to form the protective film in the above embodiments of this application can be selected from conventional materials having the aforementioned first group and hydrophobic group. To further control the impact of the protective film on the performance of the secondary battery, in some embodiments of this application, the protective film includes any one or more of a C1-C50 alkyl phosphonate film, a C1-C50 alkyl chlorosilane film, a C1-C50 fluorinated alkyl siloxane film, a C1-C50 thiol film, or benzotriazole; optionally, the protective film includes any one or more of a C1-C40 alkyl phosphonate film, a C1-C30 alkyl chlorosilane film, a C1-C30 fluorinated alkyl siloxane film, or a C1-C10 thiol film. The materials forming the aforementioned protective films have self-assembly properties, allowing them to self-assemble on the surface of the electrode plate to form a protective film with an alkyl or halogenated alkyl group as the hydrophobic group and phosphonate, chlorosilane, siloxane, thiol, or -N=N- as the first group. The exposed hydrophobic group of the protective film provides the protective film with hydrophobic properties, preventing water and oxygen in the air.

In some embodiments of this application, optionally, the C1-C40 alkyl phosphonate film includes, but is not limited to, any one or more of a propyl phosphonate film, an octadecyl phosphonate (OPA) film, or a dihexadecyl phosphonate (DHP) film. In particular, octadecyl phosphonate (OPA) and dihexadecyl phosphonate (DHP) have lower reduction potentials, thus exhibiting better chemical stability. They can not only effectively isolate water and oxygen in the air but also do not undergo reduction reactions with the electrode plate even when present on the surface of the electrode plate for an extended period, effectively controlling byproducts resulting from chain scission or dehydrogenation due to redox reactions of the alkyl chain. Moreover, the molecular chain of octadecyl phosphonate is smaller than the molecular chain of dihexadecyl phosphonate, resulting in a more compact protective film with a more pronounced protective effect on the electrode plate.

In some embodiments of this application, optionally, the C1-C30 alkyl chlorosilane film includes, but is not limited to, any one or more of an n-propyltrichlorosilane film, an isopropyltrichlorosilane film, an n-butyltrichlorosilane film, a tert-butyltrichlorosilane film, an n-hexyltrichlorosilane film, an n-heptyltrichlorosilane film, a tridecyltrichlorosilane film, a tetradecyltrichlorosilane film, an octadecyltrichlorosilane film, or tricosyltrichlorosilane. In some embodiments of this application, optionally, the C1-C30 fluorinated alkyl siloxane film includes, but is not limited to, any one or more of a heptadecafluorodecyl-trimethoxysilane (FAS-17) film or a trifluoropropyl-trimethoxysilane (FAS-3) film. In some embodiments of this application, optionally, the C1-C10 thiol film includes, but is not limited to, any one or more of an n-propylthiol film, an ethylthiol film, an isopropylthiol film, an n-butylthiol film, a tert-butylthiol film, an n-pentylthiol film, an n-hexylthiol film, or an n-decylthiol film. Among the aforementioned materials, a smaller molecular chain results in a more compact protective film, providing better protection for the electrode plate.

In some embodiments of this application, the protective film can protect the electrode plate. When the protective film contains element such as P, S, Si, or halogen, these elements can serve as evidence of the protective film's adsorption onto the electrode plate, and these elements can be utilized as active elements by the secondary battery. For example, P, S, Si, F, and Cl, as active elements, can gradually form a layer of stable substances in the battery during charge-discharge of the battery, such as stable substances like soluble PO₄³⁻ and SO₄²⁻, and insoluble NaF (NaF has low solubility in the electrolyte, typically only a few tens of ppm, and therefore is generally considered insoluble). Soluble substances can enhance the electrolyte's conductivity to some extent, while insoluble substances deposit on the negative electrode, preventing further reactions between the electrolyte and the negative electrode carbon material, thereby improving battery performance.

In some embodiments, the modified electrode plate includes a current collector and an active layer disposed on at least one surface of the current collector, with the protective film attached to the active layer.

In some embodiments of this application, the protective film includes a C1-C50 alkyl phosphonate film, and a mass content of element P in the total elements of the active layer and the protective film of the modified electrode plate is 300 ppm to 500 ppm.

In some embodiments of this application, the protective film includes a C1-C50 alkyl chlorosilane film, and a mass content of element Si in the total elements of the active layer and the protective film of the modified electrode plate is 250 ppm to 400 ppm, and a mass content of element Cl in the total elements of the active layer and the protective film of the modified electrode plate is 300 ppm to 500 ppm.

In some embodiments of this application, the protective film includes a C1-C50 fluorinated alkyl siloxane film, and a mass content of element Si in the total elements of the active layer and the protective film of the modified electrode plate is 250 ppm to 400 ppm, and a mass content of element F is in the total elements of the active layer and the protective film of the modified electrode plate 500 ppm to 750 ppm.

In some embodiments of this application, the protective film includes a C1-C50 thiol film, and a mass content of element S in the total elements of the active layer and the protective film of the modified electrode plate is 100 ppm to 300 ppm.

The above tests are conducted using the ICP test method.

Due to the exposed hydrophobic group on the surface of the modified electrode plate of this application, the contact angle of the modified electrode plate is increased as compared with the contact angle of the electrode plate. For example, without the protective film of this application, the electrode plate exhibits strong hydrophilicity with a water contact angle of 0°. After the protective film of this application is applied, the contact angle significantly increases. Therefore, the change in the contact angle proves the attachment manner of the protective film on the electrode plate. In some embodiments of this application, the water contact angle of the modified electrode plate is 65° to 85°. A larger contact angle indicates better compactness of the protective film and better protection for the electrode plate.

The contact angle test method is performed using a contact angle measuring instrument in accordance with the GB/T 14210 method.

After surface treatment with a self-assembled monolayer (SAM), the BET specific surface area of the electrode plate slightly decreases. This is mainly because the SAM is adsorbed via chemisorption, and according to the SAM formation principle, such a film is dense and uniform, resulting in a reduced BET specific surface area. In some embodiments, the BET range of the modified electrode plate is 2.0 to 3.0 m²/g.

In some embodiments of this application, the protective film is a self-assembled film, further optionally a self-assembled monolayer film. The self-assembled monolayer film formed by the self-assembled monolayer (SAM) is generated by adsorbing the first group in the liquid phase onto the lithium or sodium surface of the electrode plate, followed by the slow organization of the hydrophobic groups outward. Initially, when the adsorption molecular density of the self-assembled molecules on the electrode plate surface is low, the adsorbed molecules form disordered molecular clusters or an ordered two-dimensional lying-down phase. At higher molecular coverage, a dense and uniform ordered layered phase begins to form. The first groups are assembled together on the electrode plate surface, while the hydrophobic groups are assembled at a position distal from the electrode plate surface. The tightly packed molecular regions nucleate and grow until the electrode plate surface is covered by a single molecular layer. The adsorbate molecules are easily adsorbed because they reduce the surface free energy of the electrode plate and are stabilized by the strong chemical or electrostatic adsorption of the first group. Moreover, due to the strong chemical bonding of the first group, the self-assembled monolayer achieves uniform self-assembly at the molecular level through intermolecular interaction forces and strong repulsive forces against the solvent. The self-assembled monolayer formed on the electrode plate surface has better compactness and uniformity, more effectively blocking water and oxygen in the air from entering the electrode plate. Additionally, the self-assembled monolayer film is a single molecular layer and can have a nanoscale thickness, and such thickness typically does not hinder the transmission of lithium/sodium ions at the interface or degrade the kinetic performance of the material, thus having no impact on the electrical performance of the electrode assembly.

The electrode plate in the modified electrode plate of this application includes a pre-lithiated negative electrode plate or a pre-sodiated negative electrode plate. The composition of the negative electrode plate before pre-lithiation or negative electrode plate before pre-sodiation can refer to a conventional negative electrode plate, for example, a conventional negative electrode plate includes a negative electrode current collector and a negative electrode film layer (that is, the aforementioned active layer) disposed on at least one surface of the negative electrode current collector, the negative electrode film layer including a negative electrode active material.

As an example, the negative electrode current collector has two opposing surfaces in its thickness direction, and the negative electrode film layer is disposed on either or both of the two opposing surfaces of the negative electrode current collector.

In some embodiments, the negative electrode current collector may be a metal foil or a composite current collector. For example, for lithium-ion secondary batteries, a copper foil may be used as the metal foil. For sodium-ion secondary batteries, an aluminum foil may be used as the metal foil. The composite current collector may include a polymer material base layer and a metal layer formed on at least one surface of the polymer material base layer. The composite current collector may be formed by forming a metal material (for example, copper, copper alloy, nickel, nickel alloy, titanium, titanium alloy, silver, or silver alloy) on a polymer material base layer (for example, a base layer of polypropylene (PP), polyethylene terephthalate (PET), polybutylene terephthalate (PBT), polystyrene (PS), or polyethylene (PE)).

In some embodiments, the negative electrode active material may be a well-known negative electrode active material used in batteries. As an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compounds, and tin alloys. However, this application is not limited to these materials, and other conventional materials that can be used as negative electrode active materials for batteries may also be used. These negative electrode active materials may be used alone or in combination of two or more. Those skilled in the art can select an appropriate negative electrode active material from the above negative electrode active materials based on whether the secondary battery is a lithium-ion secondary battery or a sodium-ion secondary battery, and no further details are provided in this application.

In some embodiments, the negative electrode film layer may optionally include a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally include a conductive agent. As an example, the conductive agent may be selected from at least one of superconducting carbon, acetylene black, carbon black, Ketjen black, carbon dots, carbon nanotubes, graphene, and carbon nanofibers.

In some embodiments, the negative electrode film layer may optionally include other additives, such as a thickener, for example, sodium carboxymethyl cellulose (CMC-Na).

In some embodiments, a conventional negative electrode plate can be prepared as follows: dispersing the components used to prepare the negative electrode plate, such as the negative electrode active material, conductive agent, binder, and any other components, in a solvent (for example, deionized water) to form a negative electrode slurry; coating the negative electrode slurry onto the negative electrode current collector, followed by drying, cold pressing, and other processes to obtain the conventional negative electrode plate.

The negative electrode plate in the modified negative electrode plate of this application can be a pre-lithiated negative electrode plate obtained by conventional pre-lithiation methods or a pre-sodiated negative electrode plate obtained by conventional pre-sodiation methods. Although the specific performance of the protective film may vary with different forms of negative electrode plates, it can provide effective protection for the protective film in all cases. In some embodiments of this application, the pre-lithiated negative electrode plate includes any one or more of a metallic lithium pre-lithiated negative electrode plate, a lithium alloy pre-lithiated negative electrode plate, or an organic lithium pre-lithiated negative electrode plate; or the pre-sodiated negative electrode plate includes any one or more of a metallic sodium pre-sodiated negative electrode plate or an organic sodium pre-sodiated negative electrode plate. This application does not provide detailed descriptions of the pre-lithiation methods for the pre-lithiated negative electrode plate or the pre-sodiation methods for the pre-sodiated negative electrode plate, and those skilled in the art can implement them with reference to conventional pre-lithiation or pre-sodiation methods.

### [Preparation method of modified electrode plate]

A second embodiment of this application further provides a preparation method of the above modified electrode plate, including: preparing a protective agent solution, the protective agent including a first group and a hydrophobic group; and immersing the electrode plate in the protective agent solution for a predetermined time, the electrode plate having element sodium or element lithium on its surface, such that the first group is adsorbed onto the surface of the electrode plate, and the hydrophobic group is distal from the electrode plate to form a protective film, thereby obtaining the modified electrode plate.

The above preparation method is simple to operate and widely adaptable, applicable to the modification of various electrode plates. The protective film formed using the protective agent effectively isolates the electrode plate from water and oxygen.

The treatment method used when processing the electrode plate in the protective agent solution significantly affects the formation efficiency of the protective film. To improve the dispersibility of the protective agent on the electrode plate surface and the formation efficiency of the protective film, attempts are made to use stirring or ultrasonic treatment for the above process. However, it is found that the formation effect of the protective film is poor, and the battery capacity significantly decreased. Immersing the electrode plate in the protective agent solution for a predetermined time resulted in higher formation efficiency and a more uniform protective film. The battery capacity is maintained before and after the protective film is applied, and the protective film's protective effect ensured high capacity retention after water and oxygen treatment.

This may be because the surface of the electrode plate forms an incomplete SEI film during pre-sodiation or pre-lithiation, and the SEI film is fragile and easily damaged or detached. When the pre-sodiated or pre-lithiated electrode plate is treated with stirring or ultrasonic methods, the external forces from stirring or ultrasonication significantly damage the incomplete SEI film, altering its chemical properties or causing detachment, thereby deteriorating sodium ion transmission and reducing battery capacity. Additionally, the detachment of the SEI film affects the adhesion of the protective agent on the electrode plate surface. Consequently, even if a protective film is formed on the electrode plate surface, it cannot compensate for the defects caused by the SEI film detachment.

When the protective agent is a self-assembling monomeric substance, a self-assembled monolayer film can be formed.

In some embodiments of this application, the solvent of the protective agent solution includes an ether solvent; optionally, the ether solvent includes ethylene glycol dimethyl ether (DME), diethylene glycol dimethyl ether (DEGDME), triethylene glycol dimethyl ether (TRGDME), tetraethylene glycol dimethyl ether (TEGDME), tetrahydrofuran (THF), methyl tetrahydrofuran (Me-THF), or 1,3-dioxolane (DOL). Since the pre-sodiated/lithiated negative electrode plate or positive electrode plate has a low potential and strong reducibility, using the above ether solvents with strong resistance to reduction can prevent chemical reactions between the protective agent solution and the electrode plate.

In some embodiments of this application, the concentration of the protective agent solution is 0.01 wt% to 5 wt%, optionally 0.5 wt% to 3 wt%. By adjusting the concentration of the protective agent solution, the compactness and mass of the formed protective film are adjusted. If the concentration of the protective agent is too high, the formed protective film may experience stacking, leading to reduced uniformity and lower hydrophobic efficiency of the protective film. In addition, if the concentration of the protective agent is too low, the formation efficiency and compactness of the protective film are reduced, resulting in suboptimal protection for the electrode plate. By controlling the concentration of the protective agent solution, the protective agent adheres to the surface of the electrode plate in a uniform, compact, and monolayer manner, enhancing the hydrophobic effect. In some embodiments, the concentration of the protective agent solution is 0.01 wt%, 0.05 wt%, 0.1 wt%, 0.5 wt%, 1 wt%, 2 wt%, 3 wt%, 4 wt%, or 5 wt%.

In some embodiments of this application, the predetermined time is 2 min to 30 min, optionally 10 min to 20 min. Within the predetermined time, the protective agent molecules undergo continuous adsorptiondesorption on the electrode plate surface, gradually self-repairing to reach a dynamic equilibrium, forming the protective film. As the time extends, the amount of protective agent adhered increases, and the adhesion density improves, allowing the formation of a self-assembled monolayer film. Further extending the time leads to molecular stacking on top of the self-assembled monolayer film. Although this can further increase the adhesion density, the uniformity of the protective film is reduced, affecting the hydrophobic performance of the hydrophobic group and lowering hydrophobic efficiency. In some embodiments, the predetermined time may be 2 min, 5 min, 10 min, 15 min, 20 min, 25 min, or 30 min.

### [Positive electrode plate]

The positive electrode plate typically includes a positive electrode current collector and a positive electrode film layer (that is, the aforementioned active layer) disposed on at least one surface of the positive electrode current collector, the positive electrode film layer including a positive electrode active material.

As an example, the positive electrode current collector has two opposing surfaces in its thickness direction, and the positive electrode film layer is disposed on either or both of the two opposing surfaces of the positive electrode current collector.

In some embodiments, the positive electrode current collector may be a metal foil or a composite current collector. For example, as a metal foil, an aluminum foil may be used. The composite current collector may include a polymer material base layer and a metal layer formed on at least one surface of the polymer material base layer. The composite current collector may be formed by forming a metal material (for example, aluminum, aluminum alloy, nickel, nickel alloy, titanium, titanium alloy, silver, or silver alloy) on a polymer material base layer (for example, a base layer of polypropylene (PP), polyethylene terephthalate (PET), polybutylene terephthalate (PBT), polystyrene (PS), or polyethylene (PE)).

In some embodiments, when the positive electrode plate is a positive electrode plate for a lithium-ion battery, the positive electrode active material may be a well-known positive electrode active material used in batteries. As an example, the positive electrode active material may include at least one of the following materials: olivine-structured lithium-containing phosphates, lithium transition metal oxides, and their respective modified compounds. However, this application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂, LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (for example, LiNi_{0.8}Co_{0.15}Al_{0.05}O₂), and their modified compounds. Examples of olivine-structured lithium-containing phosphates may include, but are not limited to, at least one of lithium iron phosphate (for example, LiFePO₄ (also referred to as LFP)), lithium iron phosphate and carbon composites, lithium manganese phosphate (for example, LiMnPO₄), lithium manganese phosphate and carbon composites, lithium manganese iron phosphate, and lithium manganese iron phosphate and carbon composites.

In some embodiments, when the positive electrode plate is a positive electrode plate for a lithium-ion battery, the positive electrode active material may be a well-known positive electrode active material used in batteries. As an example, the positive electrode active material may include at least one of the following materials: sodium transition metal oxides, polyanionic compounds, and Prussian blue compounds. However, this application is not limited to these materials, and other conventional well-known materials that can be used as positive electrode active materials for sodium-ion batteries may also be used.

As an optional technical solution of this application, in the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1.

As an optional technical solution of this application, the polyanionic compound may be a class of compounds having sodium ions, transition metal ions, and tetrahedral (YO₄)ⁿ⁻ anionic units. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻.

The polyanionic compound may also be a class of compounds having sodium ions, transition metal ions, tetrahedral (YO₄)ⁿ⁻ anionic units, and halogen anions. The transition metal may be at least one of Mn, Fe, Ni, Co, Cr, Cu, Ti, Zn, V, Zr, and Ce; Y may be at least one of P, S, and Si; n represents the valence state of (YO₄)ⁿ⁻; and the halogen may be at least one of F, Cl, and Br.

The polyanionic compound may also be a class of compounds having sodium ions, tetrahedral (YO₄)ⁿ⁻ anionic units, polyhedral units (ZO_{y})^{m+}, and optional halogen anions. Y may be at least one of P, S, and Si; n represents the valence state of (YO₄)ⁿ⁻; Z represents a transition metal, which may be at least one of Mn, Fe, Ni, Co, Cr, Cu, Ti, Zn, V, Zr, and Ce; m represents the valence state of (ZO_{y})^{m+}; and the halogen may be at least one of F, Cl, and Br.

Examples of polyanionic compounds include at least one of NaFePO₄, Na₃V₂(PO₄)₃ (sodium vanadium phosphate, abbreviated as NVP), Na₄Fe₃(PO₄)₂(P₂O₇), NaM'PO₄F (where M' is one or more of V, Fe, Mn, and Ni), and Na₃(VO_{y})₂(PO₄)₂F_{3-2y}, (0 ≤ y ≤ 1).

The Prussian blue compound may be a class of compounds having sodium ions, transition metal ions, and cyanide ions (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

In some embodiments, the positive electrode film layer may optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer may optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the components used to prepare the positive electrode plate, such as the positive electrode active material, conductive agent, binder, and any other components, in a solvent (for example, N-methylpyrrolidone) to form a positive electrode slurry; coating the positive electrode slurry onto the positive electrode current collector, followed by drying, cold pressing, and other processes to obtain the positive electrode plate.

### [Electrolyte]

The electrolyte serves to conduct ions between the positive electrode plate and the negative electrode plate. This application does not impose specific restrictions on the type of electrolyte, which can be selected based on requirements. For example, the electrolyte may be liquid, gel, or all-solid-state.

In some embodiments, the electrolyte is liquid and includes an electrolyte salt and a solvent.

When applied to lithium-ion batteries, in some embodiments, the electrolyte salt includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalate)borate, lithium bis(oxalate)borate, lithium difluoro(bisoxalato)phosphate, or lithium tetrafluoro(oxalate)phosphate. In some embodiments, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone.

When applied to sodium-ion batteries, in some embodiments, the electrolyte salt includes at least one of sodium hexafluorophosphate, sodium tetrafluoroborate, sodium perchlorate, sodium bis(fluorosulfonyl)imide, sodium bis(trifluoromethanesulfonyl)imide, sodium trifluoromethanesulfonate, sodium difluorophosphate, sodium difluoro(oxalate)borate, or sodium bis(oxalate)borate. In some embodiments, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone.

In some embodiments, the electrolyte may optionally include additives. As an example, the additives may include negative electrode film-forming additives, positive electrode film-forming additives, and additives that improve certain battery performances, such as additives that improve overcharge performance, hightemperature performance, or low-temperature performance.

### [Separator]

In some embodiments, the secondary battery further includes a separator. This application does not impose particular restrictions on the type of separator, and any well-known porous-structured separator with good chemical and mechanical stability can be used.

In some embodiments, the material of the separator includes at least one of glass fiber, non-woven fabric, polyethylene, polypropylene, and polyvinylidene fluoride. The separator may be a single-layer film or a multilayer composite film, without particular limitation. When the separator is a multilayer composite film, the materials of each layer may be the same or different, without particular limitation.

In some embodiments, the positive electrode plate, negative electrode plate, and separator can be formed into an electrode assembly through a winding process or a lamination process.

In some embodiments, the secondary battery includes a secondary battery cell, or includes a battery module and a battery pack.

In some embodiments, the secondary battery may include an outer packaging. The outer packaging may be used to encapsulate the electrode assembly and electrolyte.

In some embodiments, the outer packaging of the secondary battery may be a hard shell, such as a hard plastic shell, aluminum shell, or steel shell. The outer packaging of the secondary battery may also be a soft package, such as a pouch-type soft package. The material of the soft package may be plastic, including, for example, polypropylene, polybutylene terephthalate, and polybutylene succinate.

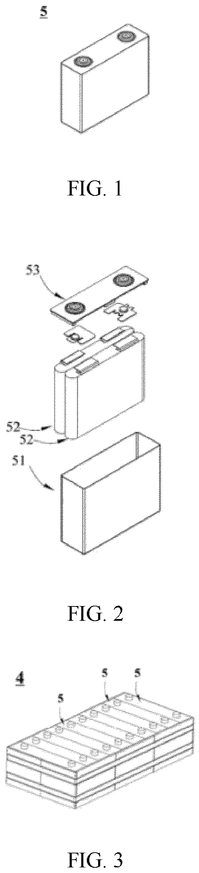

This application does not impose particular restrictions on the shape of the secondary battery cell, which may be cylindrical, square, or any other shape. For example, FIG. 1 shows a secondary battery cell 5 with a square structure as an example.

In some embodiments, referring to FIG. 2, the outer packaging may include a housing 51 and a top cover assembly 53. The housing 51 may include a bottom plate and side plates connected to the bottom plate, with the bottom plate and side plates enclosing a receiving cavity. The housing 51 has an opening communicating with the receiving cavity, and the top cover assembly 53 can cover the opening to seal the receiving cavity. The positive electrode plate, negative electrode plate, and separator can be formed into an electrode assembly 52 through a winding process or a lamination process. The electrode assembly 52 is encapsulated in the receiving cavity. The electrolyte infiltrates the electrode assembly 52. The number of electrode assemblies 52 contained in the secondary battery cell 5 may be one or more, and those skilled in the art can select according to specific practical requirements.

In some embodiments, secondary battery cells can be assembled into a battery module, and the number of secondary battery cells contained in the battery module may be one or more, with the specific number selected by those skilled in the art based on the application and capacity of the battery module.

FIG. 3 shows a battery module 4 as an example. Referring to FIG. 3, in the battery module 4, multiple secondary battery cells 5 may be sequentially arranged along the length direction of the battery module 4. Of course, they may also be arranged in any other manner. Further, the multiple secondary battery cells 5 may be fixed by fasteners.

Optionally, the battery module 4 may further include a housing with a receiving space, in which the multiple secondary battery cells 5 are accommodated.

In some embodiments, the above battery module can be assembled into a battery pack, and the number of battery modules contained in the battery pack may be one or more, with the specific number selected by those skilled in the art based on the application and capacity of the battery pack.

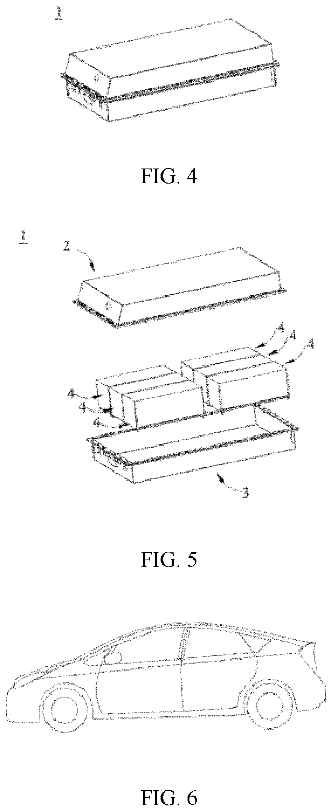

FIG. 4 and FIG. 5 show a battery pack 1 as an example. Referring to FIG. 4 and FIG. 5, the battery pack 1 may include a battery box and multiple battery modules 4 disposed in the battery box. The battery box includes an upper box body 2 and a lower box body 3, with the upper box body 2 capable of covering the lower box body 3 to form a sealed space for accommodating the battery modules 4. The multiple battery modules 4 may be arranged in the battery box in any manner.

Additionally, this application provides an electric apparatus, where the electric apparatus includes the secondary battery provided by this application. The secondary battery can be used as a power source for the electric apparatus or as an energy storage unit for the electric apparatus. The electric apparatus may include mobile devices (for example, mobile phones, laptops), electric vehicles (for example, pure electric vehicles, hybrid electric vehicles, plug-in hybrid electric vehicles, electric bicycles, electric scooters, electric golf carts, electric trucks), electric trains, ships, satellites, energy storage systems, etc., but is not limited thereto.

For the electric apparatus, the secondary battery cell, battery module, or battery pack can be selected based on its usage requirements.

FIG. 6 shows an electric apparatus as an example. The electric apparatus is a pure electric vehicle, a hybrid electric vehicle, or a plug-in hybrid electric vehicle. To meet the high power and high energy density requirements of the secondary battery for this electric apparatus, a battery pack or battery module may be used.

### [Examples]

Hereinafter, examples of this application are described. The examples described below are illustrative and are only used to explain this application, and should not be construed as limiting this application. Where specific techniques or conditions are not specified in the examples, they are performed according to the techniques or conditions described in the literature in the field or according to product specifications. Reagents or instruments used without specifying the manufacturer are conventional products commercially available.

Some raw materials used in the examples are listed below:

| Material | CAS number |
|---|---|
| Propyl phosphonate | CAS: 18812-51-6 |
| Octadecyl phosphonate | CAS: 39471-52-8 |
| Dihexadecyl phosphonate | CAS: 2197-63-9 |
| n-propyltrichlorosilane | CAS: 141-57-1 |
| Heptadecafluorodecyl-trimethoxysilane (FAS-17) | CAS: 83048-65-1 |
| Trifluoropropyl-trimethoxysilane (FAS-3) | CAS: 429-60-7 |
| n-propylthiol | CAS: 107-03-9 |
| Benzotriazole | CAS: 95-14-7 |

### Example 1

Preparation of negative electrode plate: Hard carbon as the negative electrode active material, carbon black as the conductive agent, styrene-butadiene rubber (SBR) as the binder, and sodium carboxymethyl cellulose (CMC-Na) as the thickener were dissolved in deionized water at a weight ratio of 96.2:0.8:0.8:1.2, and they were subjected to the action of a vacuum mixer to obtain a negative electrode slurry. The negative electrode slurry was uniformly applied on a copper foil. The copper foil was air-dried at room temperature and then transferred to an oven at 120°C for drying for 4h, followed by cold pressing and slitting to obtain a negative electrode plate with a negative electrode film layer, with a coating weight per unit area of 0.17 g/1540.25 mm².

Pre-sodiation treatment of negative electrode plate: Biphenyl (3.7 g) and Na metal (0.55 g) were added to 30 mL of tetrahydrofuran (THF). The foregoing substances were formulated into a 0.8 mol/L solution, and stirred at room temperature for 24 h to obtain a pre-sodiation solution. The prepared negative electrode plate was placed in the pre-sodiation solution, soaked for 3 min, then removed, washed three times with ethylene glycol dimethyl ether (DME), and vacuum-dried at 120°C for 2 h to obtain a pre-sodiated negative electrode plate.

Disposing protective film: The pre-sodiated negative electrode plate prepared in the above process was soaked in a protective agent solution for a predetermined time, with DME as the solvent, and the concentration of the protective agent and the predetermined time are recorded in Table 1. After soaking, the electrode plate was removed, washed once with DME, and dried to obtain a modified negative electrode plate.

### Examples 2 to 18

The same as Example 1 except that certain materials or parameters in the protective film provision process were changed, as detailed in Table 1.

### Example 19

The negative electrode plate prepared in Example 1 was pre-sodiated in the following manner: The dried hard carbon electrode plate was assembled into a coin cell. The cell was discharged and sodiated at a current of 0.05C, with discharge stopped at a cutoff voltage of 0.05 V. The sodiated hard carbon electrode plate was then disassembled and washed with dimethyl carbonate (DMC) to obtain a pre-sodiated hard carbon electrode plate.

The obtained pre-sodiated negative electrode plate was subjected to the protective film provision conditions of Example 1 to provide the protective film, so as to obtain the modified negative electrode plate of Example 19.

### Comparative Example 1

The negative electrode plate prepared in Example 1 was used as the negative electrode plate of Comparative Example 1.

### Comparative Example 2

The pre-sodiated negative electrode plate prepared in Example 1 was used as the negative electrode plate of Comparative Example 2.

### Comparative Example 3

The pre-sodiated negative electrode plate of Example 1 was soaked again in a 5 wt% fluoroethylene carbonate DME solution for 3 min, then taken out, immediately washed three times with DME, and dried to obtain a pre-sodiated negative electrode plate treated with a film-forming additive.

### Comparative Example 4

The same as Example 1 except that in the protective film provision process, stirring was changed to 800 rpm.

### Comparative Example 5

The same as Example 1 except that in the protective film provision process, ultrasonic treatment was performed at a power of 2000 W.

**Table 1**

| | Protective agent | Concentration (wt%) | Predetermined time (min) |
|---|---|---|---|
| Example 1 | OPA | 0.5 | 10 |
| Example 2 | OPA | 0.01 | 10 |
| Example 3 | OPA | 0.1 | 10 |
| Example 4 | OPA | 1 | 10 |
| Example 5 | OPA | 3 | 10 |
| Example 6 | OPA | 5 | 10 |
| Example 7 | OPA | 7 | 10 |
| Example 8 | OPA | 0.5 | 2 |
| Example 9 | OPA | 0.5 | 20 |
| Example 10 | OPA | 0.5 | 30 |
| Example 11 | OPA | 0.5 | 50 |
| Example 12 | Propyl phosphonate | 0.5 | 10 |
| Example 13 | DHP | 0.5 | 10 |
| Example 14 | n-propyltrichlorosilane | 0.5 | 10 |
| Example 15 | FAS-17 | 0.5 | 10 |
| Example 16 | FAS-3 | 0.5 | 10 |
| Example 17 | Benzotriazole | 0.5 | 10 |
| Example 18 | DHP + FAS-3 (1:1 mass ratio) | 0.5 | 10 |
| Example 19 | OPA | 0.5 | 10 |
| Comparative Example 4 | OPA | 0.5 | Stirring, 10 |
| Comparative Example 5 | OPA | 0.5 | Ultrasonic, 10 |

### Preparation of coin cell:

Preparation of positive electrode plate for sodium-ion battery: Sodium vanadium phosphate as the positive electrode active material, conductive carbon black SP, and a binder PVDF were dispersed in N-methylpyrrolidone (NMP) at a weight ratio of 90:10:10 and mixed to uniformity to obtain a positive electrode slurry. The positive electrode slurry was uniformly applied on an aluminum foil as the positive electrode current collector, dried, and cold-pressed to obtain a positive electrode plate, with a coating weight per unit area of 0.27 g/1540.25 mm².

Preparation of electrolyte for sodium-ion battery: In an argon atmosphere glove box (H₂O < 0.1 ppm, and O₂ < 0.1 ppm), ethylene carbonate (EC) and ethyl methyl carbonate (EMC) were mixed to uniformity at a volume ratio of 3:7 as the organic solvent, and a lithium salt NaPF₆ was added and dissolved in the organic solvent. The foregoing substances were stirred to uniformity to obtain the electrolyte, with a NaPF₆ mass content of 12.5% in the electrolyte.

Separator: A polypropylene film was used as the separator.

### Preparation of sodium-ion battery:

The dried negative electrode plate was placed in a glove box. The negative electrode shell was taken out, and a spring was placed inside the negative electrode shell with the concave side facing up. 6-8 drops of the above electrolyte were injected into the negative electrode shell using a disposable syringe. A spacer and a sodium sheet were pressed together with a glue stick and placed in the negative electrode shell, with the sodium sheet facing up. The above separator was placed over the sodium sheet, and 2-4 drops of the electrolyte were added onto the separator. The positive electrode shell with the positive electrode plate was placed onto the negative electrode shell, and the positive electrode shell was pressed with tweezers to fully embed the negative electrode shell into the positive electrode shell. The assembled battery was placed in the mold of a sealing machine, and the hydraulic arm was operated to seal the positive and negative electrode shells, obtaining the prepared coin cell.

The negative electrode plates obtained in Examples 1 to 19 and Comparative Examples 1 to 5 were used as the negative electrode plates for the sodium-ion batteries and tested as follows.
1. Inductively coupled plasma (ICP) spectroscopy was used to analyze the elemental composition of the negative electrode film layer and protective film of the negative electrode plates obtained in Examples 1 to 19 and Comparative Examples 1 to 5, with the key element analysis results of the protective film recorded in Table 2.
2. BET test: The positive electrode plate was crushed, and the specific surface area of the solid material was measured using the gas adsorption BET method according to GB/T 19587-2004.
3. Contact angle test: The hydrophilicity of the surfaces of the negative electrode plate obtained in Examples 1 to 19 and Comparative Examples 1 to 5 was tested using a contact angle measuring instrument according to the GB/T 14210 method.
4. Coin cell capacity test: For the negative electrode side, the coin cell was discharged at a constant current of 0.05C to 5 mV, left standing for 5 min, discharged at a constant current of 50 µA to 5 mV, left standing for 5 min, finally discharged at a constant current of 10 µA to 5 mV, left standing for 5 minutes, and then charged at a constant current of 0.05C to 2.0 V to obtain the first-cycle charge-discharge gram capacity and corresponding coulombic efficiency of the modified negative electrode plate.
5. Air stability evaluation:
   (1) The negative electrode plate of Comparative Example 2 was placed under a constant humidity condition of 10% RH for 48 h, then vacuum-dried at 120°C for 1 h, and assembled into a coin cell as described above.
   (2) The negative electrode plates with protective films from all examples were placed under a constant humidity condition of 10% RH for 48 h, then vacuum-dried at 120°C for 1 h, and assembled into a coin cell as described above.

The coin cells assembled in part 5 were tested according to the methods in part 4 to obtain the first-cycle charge capacity, first-cycle discharge capacity, and first-cycle coulombic efficiency of the negative electrode plates after water-oxygen treatment. These results were compared with the test results from part 4 to evaluate the impact of water and oxygen in the air on the modified negative electrode plates.

The test results are recorded in Table 2.

**Table 2**

| | Contact angle (°) | BET specific surface area (m²/g) | Key element and content in protective film (ppm) | Modified negative electrode plate | | | Water-oxygen treated modified negative electrode plate | | |
|---|---|---|---|---|---|---|---|---|---|
| | | | | First-cycle charge gram capacity (mAh/g) | First-cycle discharge gram capacity (mAh/g) | First-cycle coulombic efficiency (%) | First-cycle charge gram capacity (mAh/g) | First-cycle discharge gram capacity (mAh/g) | First-cycle coulombic efficiency (%) |
| Example 1 | 83 | 2.1 | P, 350 | 295.3 | 297.1 | 99.39 | 295.1 | 296.6 | 99.49 |
| Example 2 | 10 | 5 | P, 79 | 296.8 | 298.7 | 99.36 | 220.1 | 243.5 | 90.39 |
| Example 3 | 50 | 2.9 | P, 159 | 297.5 | 295.6 | 100.64 | 260.3 | 272.9 | 95.38 |
| Example 4 | 85 | 2.5 | P, 390 | 294.7 | 298.9 | 98.59 | 293.4 | 297.5 | 98.62 |
| Example 5 | 80 | 3.2 | P, 450 | 292.7 | 295.6 | 99.02 | 287.4 | 290.7 | 98.86 |
| Example 6 | 78 | 3.1 | P, 489 | 288.8 | 291.9 | 98.94 | 275.4 | 288.7 | 95.39 |
| Example 7 | 75 | 2.9 | P, 526 | 284.6 | 290.6 | 97.94 | 250.5 | 263.1 | 95.21 |
| Example 8 | 12 | 5.2 | P, 85 | 297.8 | 299.7 | 99.37 | 219.1 | 242.5 | 90.35 |
| Example 9 | 85 | 2.9 | P, 455 | 289.5 | 293.5 | 98.64 | 287.7 | 292 | 98.53 |
| Example 10 | 83 | 2.7 | P, 490 | 285.8 | 293.9 | 97.24 | 277.4 | 289.7 | 95.75 |
| Example 11 | 83 | 2.5 | P, 526 | 283.6 | 291.6 | 97.26 | 255.5 | 265.3 | 96.31 |
| Example 12 | 78 | 3.1 | P, 390 | 285.7 | 293.1 | 97.48 | 280.6 | 292.3 | 96.00 |
| Example 13 | 82 | 2.5 | P, 349 | 292.7 | 298.2 | 98.16 | 285.4 | 294.6 | 96.88 |
| Example 14 | 72 | 3.5 | Si, 380 | 287.6 | 292.3 | 98.39 | 275.7 | 289.6 | 95.20 |
| Example 15 | 60 | 5.1 | F, 550 | 275.8 | 280.1 | 98.46 | 265.3 | 275.6 | 96.26 |
| Example 16 | 68 | 4.5 | F, 570 | 290.6 | 293.7 | 98.94 | 289.4 | 292.9 | 98.81 |
| Example 17 | 25 | 4.9 | N, 780 | 279 | 283 | 98.59 | 245.3 | 258.3 | 94.97 |
| Example 18 | 86 | 2.2 | P, 365 | 298.6 | 299 | 99.87 | 296.9 | 298.5 | 99.46 |
| Example 19 | 70 | 3 | P, 159 | 291.3 | 296.9 | 98.11 | 287 | 293.9 | 96.88 |
| | | | F, 290 | | | | | | |
| Comparative Example 1 | 87 | 5.7 | - | 296.6 | 335 | 88.54 | 295.8 | 334.2 | 88.51 |
| Comparative Example 2 | 0 | 5.5 | - | 295 | 293 | 100.68 | NG | NG | NG |
| Comparative Example 3 | 56 | 5 | - | 297 | 299 | 99.33 | 199 | 235.9 | 84.36 |
| Comparative Example 4 | 29 | 4.1 | P, 59 | 226.8 | 268.9 | 84.1 | NG | NG | NG |
| Comparative Example 5 | 35 | 3.3 | P, 89 | 235.7 | 275.5 | 85.5 | 197.6 | 238.6 | 82.8 |

NG indicates that the test could not be performed.

From the comparison between Comparative Examples 1 and 2 in Table 2, it can be seen that after pre-sodiation of the negative electrode plate, before water-oxygen treatment, the first-cycle charge gram capacities of the negative electrode plates are comparable, and the first-cycle discharge gram capacity after pre-sodiation is significantly improved. However, after water-oxygen treatment, the first-cycle charge-discharge gram capacity and coulombic efficiency of Comparative Example 2 are significantly affected.

From the comparison between Comparative Examples 1, 2, and 3 in Table 2, it can be seen that after treatment with a film-forming additive in Comparative Example 3, the first-cycle charge-discharge gram capacity is improved, but it deteriorates significantly as compared with the charge-discharge gram capacity before pre-sodiation, indicating that the water-oxygen protection effect of this treatment is not ideal.

From the comparison between each example and Comparative Example 2 in Table 2, it can be seen that disposing the protective film in this application does not significantly adversely affect the first-cycle charge-discharge gram capacity and first-cycle coulombic efficiency of the pre-sodiated negative electrode plate and provides significant and effective protection to the pre-sodiated negative electrode plate. The first-cycle charge-discharge gram capacity and coulombic efficiency of the modified negative electrode plate after water-oxygen treatment are significantly improved as compared with the pre-sodiated negative electrode plate of Comparative Example 2. Moreover, it can be seen from comparison with Comparative Example 3 that disposing the protective film in this application allows the pre-sodiated negative electrode plate to have fully utilized first-cycle charge-discharge gram capacity and improved coulombic efficiency.

From the comparison of Examples 1 to 7 in Table 2, it can be seen that within a certain range, a larger amount of the protective agent means a larger contact angle and more significant improvement in the hydrophobicity of the pre-sodiated negative electrode plate.

From the comparison of Example 1 and Comparative Examples 4 and 5, it can be seen that forming the protective film through immersion results in a better formation effect of the protective film, a larger contact angle, and a more significant improvement in hydrophobic performance.

### Example 20

Preparation of graphite negative electrode plate: Graphite as the negative electrode active material, carbon black as the conductive agent, styrene-butadiene rubber (SBR) as the binder, and sodium carboxymethyl cellulose (CMC-Na) as the thickener were dissolved in deionized water at a weight ratio of 96.2:0.8:0.8:1.2, and a negative electrode slurry was obtained under the action of a vacuum mixer. The negative electrode slurry was uniformly applied on a copper foil. The copper foil was air-dried at room temperature and then transferred to an oven at 120°C for drying for 4 h, followed by cold pressing and slitting to obtain a graphite negative electrode plate, with a coating weight per unit area of 0.17 g/1540.25 mm².

Pre-lithiation treatment of graphite electrode plate: Biphenyl (3.7 g) and Li metal (0.167 g) were added to 30 mL of THF. The foregoing substances were formulated into a 0.8 mol/L solution, and stirred at room temperature for 24 h to obtain a pre-lithiation solution. The prepared graphite negative electrode plate was placed in the pre-lithiation solution, soaked for 3 min, then taken out, washed three times with DME, and vacuum-dried at 120°C for 2 h to obtain the pre-lithiated negative electrode plate.

Disposing protective film: The pre-lithiated negative electrode plate prepared in the above process was soaked in a protective agent solution for a predetermined time, with DME as the solvent, and the composition of the protective agent and the predetermined time are recorded in Table 3. After soaking, the electrode plate was removed, washed once with DME, and dried to obtain the modified negative electrode plate.

### Examples 21 to 36

The differences from Example 20 lie only in changes to certain materials or parameters in the protective film provision process, as detailed in Table 3, with all other aspects being the same as Example 20.

### Example 37

The negative electrode plate prepared in Example 20 was pre-lithiated in the following manner: The dried graphite electrode plate was assembled into a coin cell. The cell was discharged and lithiated at a current of 0.05C, with discharge stopped at a cutoff voltage of 0.5 V. The lithiated graphite electrode plate was then disassembled and washed with dimethyl carbonate (DMC) to obtain the pre-sodiated hard carbon electrode plate.

The obtained pre-lithiated negative electrode plate was subjected to the protective film provision conditions of Example 20 to provide the protective film, so as to obtain the modified negative electrode plate of Example 37.

### Comparative Example 6

The negative electrode plate prepared in Example 20 was used as the negative electrode plate of Comparative Example 6.

### Comparative Example 7

The pre-lithiated negative electrode plate prepared in Example 20 was used as the negative electrode plate of Comparative Example 7.

### Comparative Example 8

The pre-lithiated negative electrode plate of Example 20 was soaked again in a 5 wt% fluoroethylene carbonate DME solution for 3 min, then removed, immediately washed three times with DME, and dried to obtain a pre-lithiated negative electrode plate treated with a film-forming additive.

**Table 3**

| | Protective agent | Concentration (wt%) | Predetermined time (min) |
|---|---|---|---|
| Example 20 | DHP | 0.5 | 10 |
| Example 21 | DHP | 0.01 | 10 |
| Example 22 | DHP | 0.1 | 10 |
| Example 23 | DHP | 1 | 10 |
| Example 24 | DHP | 3 | 10 |
| Example 25 | DHP | 5 | 10 |
| Example 26 | DHP | 7 | 10 |
| Example 27 | DHP | 0.5 | 2 |
| Example 28 | DHP | 0.5 | 20 |
| Example 29 | DHP | 0.5 | 30 |
| Example 30 | DHP | 0.5 | 50 |
| Example 31 | Propyl phosphonate | 0.5 | 10 |
| Example 32 | OPA | 0.5 | 10 |
| Example 33 | n-propyltrichlorosilane | 0.5 | 10 |
| Example 34 | FAS-17 | 0.5 | 10 |
| Example 35 | FAS-3 | 0.5 | 10 |
| Example 36 | Benzotriazole | 0.5 | 10 |
| Example 37 | DHP | 0.5 | 10 |

### Preparation of coin cell:

Preparation of positive electrode plate for lithium-ion battery: Lithium iron phosphate as the positive electrode active material, conductive carbon black SP, and PVDF as the binder were dispersed in N-methylpyrrolidone (NMP) at a weight ratio of 97:1.5:1.5 and mixed to uniformity to obtain a positive electrode slurry. The positive electrode slurry was uniformly applied on an aluminum foil as the positive electrode current collector, dried, and cold-pressed to obtain the positive electrode plate, with a coating weight per unit area of 0.27 g/1540.25 mm².

Preparation of electrolyte for lithium-ion battery: In an argon atmosphere glove box (H₂O < 0.1 ppm, and O₂ < 0.1 ppm), ethylene carbonate (EC) and ethyl methyl carbonate (EMC) were mixed uniformly at a volume ratio of 3:7 as the organic solvent, a lithium salt LiPF₆ was added and dissolved in the organic solvent, and the foregoing substances were stirred to uniformity to obtain the electrolyte, with a LiPF₆ mass content of 12.5% in the electrolyte.

Separator: A polypropylene film was used as the separator.

### Preparation of lithium-ion battery:

The dried negative electrode plate was placed in a glove box. The negative electrode shell was taken out, and a spring was placed inside the negative electrode shell with the concave side facing up. 6-8 drops of the above electrolyte were injected into the negative electrode shell using a disposable syringe. A spacer and a lithium sheet were pressed together with a glue stick and placed in the negative electrode shell, with the lithium sheet facing up. The above separator was placed over the lithium sheet, and 2-4 drops of the electrolyte were added onto the separator. The positive electrode shell with the positive electrode plate was placed onto the negative electrode shell, and the positive electrode shell was pressed with tweezers to fully embed the negative electrode shell into the positive electrode shell. The assembled battery was placed in the mold of a sealing machine, and the hydraulic arm was operated to seal the positive and negative electrode shells, obtaining the prepared coin cell.

The negative electrode plates obtained in Examples 20 to 37 and Comparative Examples 6 to 8 were used as the negative electrode plates for the lithium-ion coin cells and tested for ICP, BET, contact angle, coin cell capacity, and air stability evaluation as described previously.

The test results are recorded in Table 4.

**Table 4**

| | Contact angle (°) | BET specific surface area (m²/g) | Key element and content in protective film (ppm) | Modified negative electrode plate | | | Water-oxygen treated modified negative electrode plate | | |
|---|---|---|---|---|---|---|---|---|---|
| | | | | First-cycle charge gram capacity (mAh/g) | First-cycle discharge gram capacity (mAh/g) | First-cycle coulombic efficiency (%) | First-cycle charge gram capacity (mAh/g) | First-cycle discharge gram capacity (mAh/g) | First-cycle coulombic efficiency (%) |
| Example 20 | 84 | 2.5 | P, 375 | 354 | 356 | 99.40 | 350 | 353 | 99.15 |
| Example 21 | 11 | 5.1 | P, 85 | 354.4 | 354.5 | 99.97 | 260.1 | 283.5 | 91.75 |
| Example 22 | 52 | 3 | P, 149 | 354.2 | 355 | 99.77 | 341.2 | 347.2 | 98.27 |
| Example 23 | 83 | 2.4 | P, 385 | 353.2 | 355 | 99.49 | 347.2 | 349.2 | 99.43 |
| Example 24 | 79 | 3.3 | P, 455 | 345.9 | 348.2 | 99.34 | 339.1 | 346.1 | 97.98 |
| Example 25 | 77 | 3.1 | P, 479 | 344.8 | 346.1 | 99.62 | 321.8 | 335.9 | 95.80 |
| Example 26 | 74 | 2.8 | P, 536 | 339.3 | 343.1 | 98.89 | 297.1 | 303.4 | 97.92 |
| Example 27 | 13 | 5.1 | P, 75 | 350.1 | 352.2 | 99.40 | 261.2 | 285.1 | 91.62 |
| Example 28 | 84 | 2.8 | P, 460 | 342.7 | 346.2 | 98.99 | 340.1 | 345.8 | 98.35 |
| Example 29 | 82 | 2.7 | P, 499 | 339.1 | 342.5 | 99.01 | 317.4 | 331.7 | 95.69 |
| Example 30 | 82 | 2.4 | P, 539 | 330.6 | 335.6 | 98.51 | 291.4 | 298.9 | 97.49 |
| Example 31 | 77 | 3.2 | P, 399 | 335.7 | 340.1 | 98.71 | 330.6 | 339.2 | 97.46 |
| Example 32 | 79 | 2.6 | P, 339 | 342.7 | 348.2 | 98.42 | 335.4 | 344.6 | 97.33 |
| Example 33 | 70 | 3.4 | Si, 379 | 337.6 | 342.3 | 98.63 | 325.7 | 339.6 | 95.91 |
| Example 34 | 62 | 5 | F, 555 | 335.8 | 340.1 | 98.74 | 315.3 | 325.6 | 96.84 |
| Example 35 | 67 | 4.3 | F, 590 | 350.6 | 354.7 | 98.84 | 347.4 | 351.9 | 98.72 |
| Example 36 | 26 | 4.7 | N, 810 | 339 | 343 | 98.83 | 325.3 | 338.3 | 96.16 |
| Example 37 | 86 | 2.1 | P, 370 | 352 | 352.9 | 99.74 | 350.9 | 352.6 | 99.52 |
| Comparative Example 6 | 87 | 5.7 | - | 352.9 | 375.58 | 93.96 | 350.9 | 374.3 | 93.75 |
| Comparative Example 7 | 0 | 5.5 | - | 353 | 354 | 99.72 | NG | NG | NG |
| Comparative Example 8 | 56 | 5 | - | 353.2 | 354.2 | 99.72 | 236 | 252 | 93.65 |

NG indicates that the test could not be performed.

From the comparison between Comparative Examples 6 and 7 in Table 4, it can be seen that after pre-lithiation of the negative electrode plate, before water-oxygen treatment, the first-cycle charge gram capacities of the negative electrode plates are comparable, and the first-cycle discharge gram capacity after pre-lithiation is significantly improved. However, after water-oxygen treatment, the first-cycle charge-discharge gram capacity and coulombic efficiency of Comparative Example 7 are significantly affected.

From the comparison between Comparative Examples 6, 7, and 8 in Table 4, it can be seen that after treatment with a film-forming additive in Comparative Example 8, the first-cycle charge-discharge gram capacity is improved, but it deteriorates significantly as compared with the charge-discharge gram capacity before pre-lithiation, indicating that the water-oxygen protection effect of this treatment is not ideal.

From the comparison between each example and Comparative Example 7 in Table 4, it can be seen that disposing the protective film in this application does not significantly adversely affect the first-cycle charge-discharge gram capacity and coulombic efficiency of the pre-lithiated negative electrode plate and provides significant and effective protection to the pre-lithiated negative electrode plate. The first-cycle charge-discharge gram capacity and first-cycle coulombic efficiency of the modified negative electrode plate after water-oxygen treatment are significantly improved as compared with the pre-lithiated negative electrode plate of Comparative Example 7. Moreover, it can be seen from comparison with Comparative Example 8 that disposing the protective film in this application allows the pre-lithiated negative electrode plate to have fully utilized first-cycle charge-discharge gram capacity and improved coulombic efficiency.

From the comparison of Examples 20 to 26 in Table 4, it can be seen that within a certain range, a larger amount of the protective agent means a larger contact angle and more significant improvement in the hydrophobicity of the pre-lithiated negative electrode plate.

Although this application has been described with reference to preferred embodiments, various improvements can be made, and equivalents can be substituted for components thereof without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A modified electrode plate comprising:
an electrode plate, the electrode plate having element sodium or element lithium on its surface, and the electrode plate comprising a pre-lithiated negative electrode plate or a pre-sodiated negative electrode plate; and
a protective film, the protective film comprising a first group and a hydrophobic group, the first group being attached to the surface of the electrode plate, the hydrophobic group being distal from the electrode plate, and the hydrophobic group being exposed on a surface of the protective film.

2. The modified electrode plate according to claim 1, wherein the first group comprises any one or more of a phosphate group, a halogenated silyl group, a siloxane group, a thiol group, a carboxylic acid group, or -N=N-; and/or
the hydrophobic group comprises any one or more of a C6-C20 aryl group, a C1-C50 alkyl group, or a C1-C50 halogenated alkyl group.

3. The modified electrode plate according to claim 1 or 2, wherein the hydrophobic group comprises any one or more of a C6-C10 aryl group, a C1-C40 alkyl group, or a C1-C30 halogenated alkyl group.

4. The modified electrode plate according to any one of claims 1 to 3, wherein the protective film comprises any one or more of a C1-C50 alkyl phosphonate film, a C1-C50 alkyl chlorosilane film, a C1-C50 fluorinated alkyl siloxane film, a C1-C50 thiol film, or benzotriazole.

5. The modified electrode plate according to claim 4, wherein the protective film comprises any one or more of a C1-C40 alkyl phosphonate film, a C1-C30 alkyl chlorosilane film, a C1-C30 fluorinated alkyl siloxane film, or a C1-C10 thiol film.

6. The modified electrode plate according to claim 5, wherein the C1-C40 alkyl phosphonate film comprises any one or more of a propyl phosphonate film, an octadecyl phosphonate film, or a dihexadecyl phosphonate film;
the C1-C30 alkyl chlorosilane film comprises any one or more of an n-propyltrichlorosilane film, an isopropyltrichlorosilane film, an n-butyltrichlorosilane film, a tert-butyltrichlorosilane film, an n-hexyltrichlorosilane film, an n-heptyltrichlorosilane film, a tridecyltrichlorosilane film, a tetradecyltrichlorosilane film, an octadecyltrichlorosilane film, or tricosyltrichlorosilane ;
the C1-C30 fluorinated alkyl siloxane film comprises any one or more of a heptadecafluorodecyl-trimethoxysilane film or a trifluoropropyl-trimethoxysilane film; or
the C1-C10 thiol film comprises any one or more of an n-propylthiol film, an ethylthiol film, an isopropylthiol film, an n-butylthiol film, a tert-butylthiol film, an n-pentylthiol film, an n-hexylthiol film, or an n-decylthiol film.

7. The modified electrode plate according to any one of claims 1 to 6, wherein the modified electrode plate comprises a current collector and an active layer disposed on at least one surface of the current collector, the protective film being attached to the active layer,
the protective film comprises a C1-C50 alkyl phosphonate film, wherein a mass content of element P in the total elements of the active layer and the protective film of the modified electrode plate is 300 ppm to 500 ppm;
the protective film comprises a C1-C50 alkyl chlorosilane film, wherein a mass content of element Si in the total elements of the active layer and the protective film of the modified electrode plate is 250 ppm to 400 ppm, and a mass content of element Cl in the total elements of the active layer and the protective film of the modified electrode plate is 300 ppm to 500 ppm;
the protective film comprises a C1-C50 fluorinated alkyl siloxane film, wherein a mass content of element Si in the total elements of the active layer and the protective film of the modified electrode plate is 250 ppm to 400 ppm, and a mass content of element F in the total elements of the active layer and the protective film of the modified electrode plate is 500 ppm to 750 ppm; or
the protective film comprises a C1-C50 thiol film, wherein a mass content of element S in the total elements of the active layer and the protective film of the modified electrode plate is 100 ppm to 300 ppm.

8. The modified electrode plate according to any one of claims 1 to 7, wherein a water contact angle of the modified electrode plate is 65° to 85°.

9. The modified electrode plate according to any one of claims 1 to 8, wherein the protective film is a self-assembled monolayer film.

10. The modified electrode plate according to any one of claims 1 to 9, wherein the pre-lithiated negative electrode plate comprises any one or more of a metallic lithium pre-lithiated negative electrode plate, a lithium alloy pre-lithiated negative electrode plate, or an organic lithium pre-lithiated negative electrode plate; or
the pre-sodiated negative electrode plate comprises any one or more of a metallic sodium pre-sodiated negative electrode plate, an electrochemical pre-sodiated negative electrode plate, or an organic sodium pre-sodiated negative electrode plate.

11. A preparation method of the modified electrode plate according to any one of claims 1 to 10, wherein the preparation method comprises:
preparing a protective agent solution, the protective agent comprising a first group and a hydrophobic group; and
immersing an electrode plate in the protective agent solution for a predetermined time, the electrode plate having element sodium or element lithium on its surface, such that the first group is attached to the surface of the electrode plate, and the hydrophobic group is distal from the electrode plate to form a protective film, thereby obtaining the modified electrode plate.

12. The preparation method according to claim 11, wherein a solvent of the protective agent solution comprises an ether solvent.

13. The preparation method according to claim 11 or 12, wherein the ether solvent comprises ethylene glycol dimethyl ether, diethylene glycol dimethyl ether, triethylene glycol dimethyl ether, tetraethylene glycol dimethyl ether, tetrahydrofuran, methyl tetrahydrofuran, or 1,3-dioxolane.

14. The preparation method according to any one of claims 11 to 13, wherein a concentration of the protective agent solution is 0.01 wt% to 5 wt%.

15. The preparation method according to claim 14, wherein the concentration of the protective agent solution is 0.5 wt% to 3 wt%.

16. The preparation method according to any one of claims 11 to 15, wherein the predetermined time is 2 min to 30 min.

17. The preparation method according to claim 16, wherein the predetermined time is 10 min to 20 min.

18. A secondary battery comprising a positive electrode plate, a negative electrode plate, and an electrolyte, wherein the positive electrode plate or the negative electrode plate comprises the modified electrode plate according to any one of claims 1 to 10.

19. An electric apparatus comprising a secondary battery, wherein the secondary battery comprises the secondary battery according to claim 18.
